# EUROPEAN PATENT APPLICATION

(11) **EP 1 901 486 A1**
(43) Date of publication of application: **19.03.2008**
(21) Application number: 06120768.4
(22) Date of filing: 15.09.2006
(51) Int. Cl.: H04L 12/28

(54) **Wireless network**

(71) Applicant: Koninklijke Philips Electronics N.V., 5621 BA Eindhoven (NL)
(72) Inventor: The designation of the inventor has not yet been filed
(74) Representative: Dusseldorp, Jan Charles

(57) **Abstract**

A wireless network (1) comprises basic service sets (6, 7) and a distribution system (8). Each of the basic service sets (6, 7) comprises stations (2, 3) and stations (4, 5), respectively. Thereby, data is moved between their basic service sets (6, 7) and said distribution system (8) via access points (10, 11), which are also stations (3, 4). A medium access control architecture incorporating a distributed coordination function as an access method is provided. Thereby, a normal mode and a mesh mode are provided. Thereby, normal mode is used to transmit data between stations (2, 3; 4, 5) within each of the basic service sets (6; 7). In mesh mode, data is transmitted between the access points (10, 11). To priorize transmission within the distribution system (8) the stations (2, 5), which are not mesh devices, are silence during mesh mode. Therefor, one of the access points (10, 11) sends a request to send in which the address of the access point (10, 11) is used as both the transmitter address and the receiver address of this request to send.

## Description

### FIELD OF THE INVENTION

The present invention relates to a wireless network comprising a medium access control architecture and to a method for such an wireless network. More particularly, the present invention relates to a wireless network on the basis of a standard such as a standard from the family of IEEE 802 standards, especially ANSI/IEEE Std 802.11.

### BACKGROUND OF THE INVENTION

In a wireless network the wireless medium is shared among several devices. With cheap devices only a single radio is available. Further, in dense populated areas, only a single frequency channel may be available. A wireless mesh network may help to extend the range of a wireless network and provide seamless coverage. In case of a single frequency channel, stations and entities of the wireless mesh network share the same channel of the wireless medium. However, the wireless mesh network carries the aggregated traffic of all stations. This may result in a poor performance or a reduced reliability of a network.

### SUMMARY OF THE INVENTION

It is an object of the invention to provide a wireless network, and a method and device for such a wireless network with an improved performance, especially with an improved utilization of the capacity of one or more wireless channels.

This object is solved by a wireless network as defined in claim 1, by a method as defined in claim 7, and by a mesh device as claimed in claim 10. Advantageous developments of the invention are mentioned in the dependent claims.

Wireless networks usually support single hop connections from devices to central nodes only. To use mesh technology, a cooperative behavior of all devices that share a frequency is needed. However, wireless devices may not grant priority to wireless mesh networks or the access points to which they are associated. Hence, without any means of flow control or congestion avoidance, legacy devices, which are non-mesh devices, may easily overload the wireless medium. As a result, frames cannot be delivered and legacy devices retry frame transmission. The mesh devices may, for example, forward frames to and from their associated devices. Since the mesh devices usually cannot directly signal to the associated devices to reduce frame generation, the wireless medium is easily overloaded. Then, with a congested wireless medium, the mesh network cannot forward data. As a result, frame losses may occur and higher layer protocols may try to resend the lost data so that the situation becomes even worse. In such a case, priorization can optimize the utilization of the capacity of the network so that the overall data rate is increased and a high reliability is achieved.

The wireless network of the invention enables priorization due to the fact that a mesh device can transmit a request to send comprising an address of the mesh device as both the transmitter address and the receiver address. Usually, a device does only reply, when its address equals the receiver address of the request to send. But, when the receiver address also equals the address of the device that transmits the request to send, then in normal operation no device answers. This fact is used to priorize a mesh network consisting of mesh devices. Mesh devices are enabled to determine whether the transmitter address of an request to send equals the receiver address in this request to send. When this is the case, a mesh device knows that non-mesh devices are silenced, and that for a specific period communication between mesh devices is possible, which is not disturbed by non-mesh devices. Hence, the wireless medium is reserved to the mesh network during such a period.

The wireless network comprising such a mesh network has the advantage that the ability to extend the range of the wireless network is provided. Thereby, several mesh devices may cooperate and forward frames over the wireless channel. As an application, the mesh devices may build up a mesh network which operates as a service provider to associated devices and carries the aggregated traffic. During priorization of the mesh network a harmful interference of the traffic from non-mesh devices with the mesh traffic is avoided. It is noted that the priorization of mesh devices over non-mesh devices may be limited to devices in the surroundings of these mesh-devices.

It is advantageous that the mesh device that has data for at least one other mesh device transmits a request to send to begin transmission of data according to the distributed coordination function, wherein the request to send comprises the address of the mesh device as both the transmitter address and the receiver address. This has the advantage that the other mesh devices know in advance that the mesh device transmitting the request to send has data to be transmitted over the mesh network of the wireless network.

It is advantageous that in mesh mode another mesh device, which intends to receive the data from the mesh device, initiates transmission of the data from the mesh device to itself. Thereby, it is advantageous that the other mesh device transmits a clear to send to the mesh device so as to initiate the transmission. Further, it is advantageous that the other mesh device determines whether it intends to receive the data from the mesh device on the basis of the transmitter address of the request to send from the mesh device. For example, the other mesh device may know from a routing protocol that, usually, the mesh device has data for it. Further, mesh devices that are located in the surrounding of the mesh device that has sent the request to send, and therefore have a good quality of service, may request transmission to them.

It is advantageous that non-mesh devices that receive the request to send from the device set their network allocation vector, when the receiver address is different from their own address, and that mesh devices that receive the request to send from the device set their network allocation vector, when the receiver address is different from their own address and the receiver address is different from the transmitter address. This has the advantage that the mesh network can be priorized in a flexible way. For example, when network traffic is relatively low, also the devices of the mesh network, which are mesh devices, may communicate in normal mode so that the non-mesh devices are not temporarily silenced and the overall data rate is high. But, when the network traffic increases, priorization of mesh devices may be necessary.

It is advantageous that the wireless network comprises basic service sets and a distribution system, wherein each of the basic service sets comprises an access point which is a mesh device, and stations that are not access points, wherein data is moved between each of the basic service sets and the distribution system via the access point belonging to this basic service set, and that the stations that are not access points are operating as non-mesh devices. This has the advantage that an increased coverage is possible. For example, physical link limitations may limit the direct station-to-station distance, which, for some networks, is sufficient. But, for other networks, an increased coverage exceeding the direct station-to-station distance is required. The distribution system is used to interconnect basic service sets to form an extended network. The wireless medium may be logically separated from the distribution system medium, wherein each logical medium is used for different purposes by a different component of the architecture. Hence, a high flexibility of the architecture is achieved. It is noted that an access point can be a station that provides access to the distribution system by providing distribution system services in addition to acting as a station. It is advantageous that all access points are also stations so that they are addressable, wherein the addresses used by an access point for the communication on the wireless medium and on the distribution system medium are not necessarily the same.

It is advantageous that in mesh mode the request to send comprises a value for a duration for a network allocation vector for non-mesh devices, wherein this value is set on the basis of an amount of data to be transmitted. This has the advantage that the occupation of the wireless network by mesh devices forming the mesh network is optimized so that the overall data rate is increased.

These and other aspects of the invention will be apparent from and elucidated with reference to the embodiments described hereinafter.

### BRIEF DESCRIPTION OF THE DRAWINGS

The present invention will become readily understood from the following description of preferred embodiments thereof made with reference to the accompanying drawings, in which like parts are designated by like reference signs and in which:
Fig. 1 shows a schematic view of a wireless network according to an embodiment of the present invention;
Fig. 2 illustrates links between stations of a wireless network according to an embodiment of the present invention;
Fig. 3 shows a first example for a communication between mesh devices of an embodiment of a wireless network to illustrate a method for the wireless network;
Fig. 4 shows a second example for a communication between mesh devices of an embodiment of a wireless network to illustrate a method for the wireless network; and
Fig. 5 shows a third example for a communication between mesh devices of an embodiment of a wireless network to illustrate a method for the wireless network.

### DETAILED DESCRIPTION OF THE EMBODIMENTS

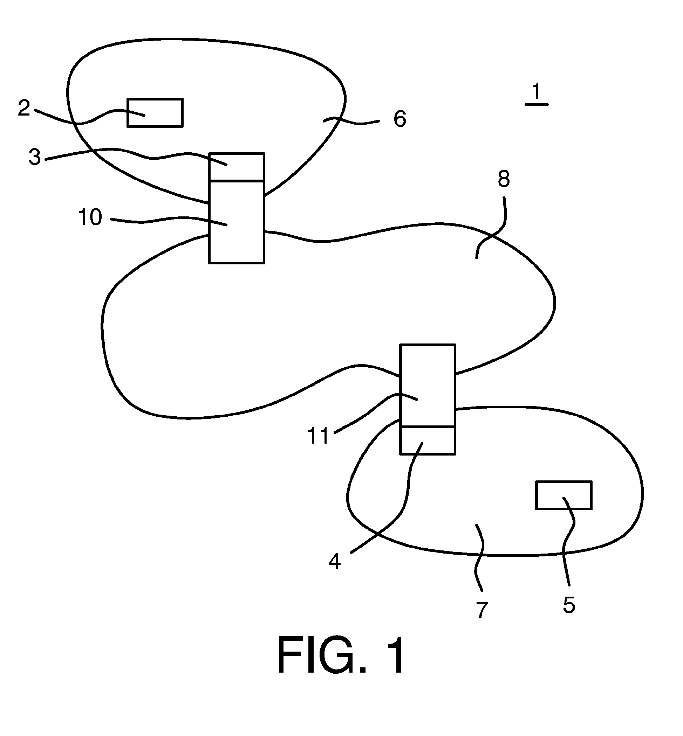

Fig. 1 shows a schematic structure of a wireless network 1 according to an embodiment of the invention. The wireless network 1 can be used for networks according to a standard such as ANSI/IEEE Std 802.11 and further developments such as IEEE 802.11s ESS. The wireless network 1 and the method for the wireless network 1 are applicable but not limited to wireless local area networks (WLAN). The wireless network 1 and the method for the wireless network 1 may be a part or built up a wireless communication system. Thereby, the wireless network 1 may also be combined with other networks, which can be wireless or wireline networks.

The addressable units of the wireless network 1 are stations 2, 3, 4, 5. Each of the stations 2 to 5 is a message destination, but not, generally, a fixed location. The stations 2 to 5 may be mobile or portable, wherein a portable one is moved from location to location, but is only used while at a fixed location, and a mobile one actually makes access to the wireless network 1 while in motion. But, propagation effects blure the distinction between portable and mobile stations 2 to 5 so that stationary stations often appear to be mobile due to propagation effects.

The architecture of the wireless network 1 comprises several components that interact to provide a wireless local area network or such, which supports station mobility to upper layers. The wireless network 1 comprises a basic service set 6, which comprises the stations 2, 3, and a basic service set 7, which comprises the stations 4, 5. The basic service sets 6, 7 are independent from each other. Each of the basic service sets 6, 7 may be formed without pre-planning, for only as long as the local area network is needed, so that this type of network may be seen as an ad-hoc network.

The association between the stations 2, 3 and basic service set 6 is dynamic. The stations 2, 3 may turn off or go out of range, other stations may turn on or come within range. The properties of the basic service set 7 are similar to that of the basic service set 6.

The wireless network 1 comprises a distribution system 8. The dynamic association between the stations 2 to 5 and their respective basic service sets 6, 7 is a reason to involve the distribution system 8 to allow communication between stations 2, 5 of different basic service sets 6, 7. Hence, the distribution system 8 connects different basic service sets 6, 7. Data move between the basic service set 6 and the distribution system 8 via an access point 10. Further, data move between the basic service set 7 and the distribution system 8 via an access point 11. Thereby, it is advantageous that each of the access points 10, 11 is a station (here station 3 and 4, respectively) that provides access to the distribution system 8 by providing a distribution system service in addition to acting as a station 3, 4. Therefore, each access point 10, 11 of the wireless network 1 is also a station 3, 4, but there are also stations 2, 5, which are not access points.

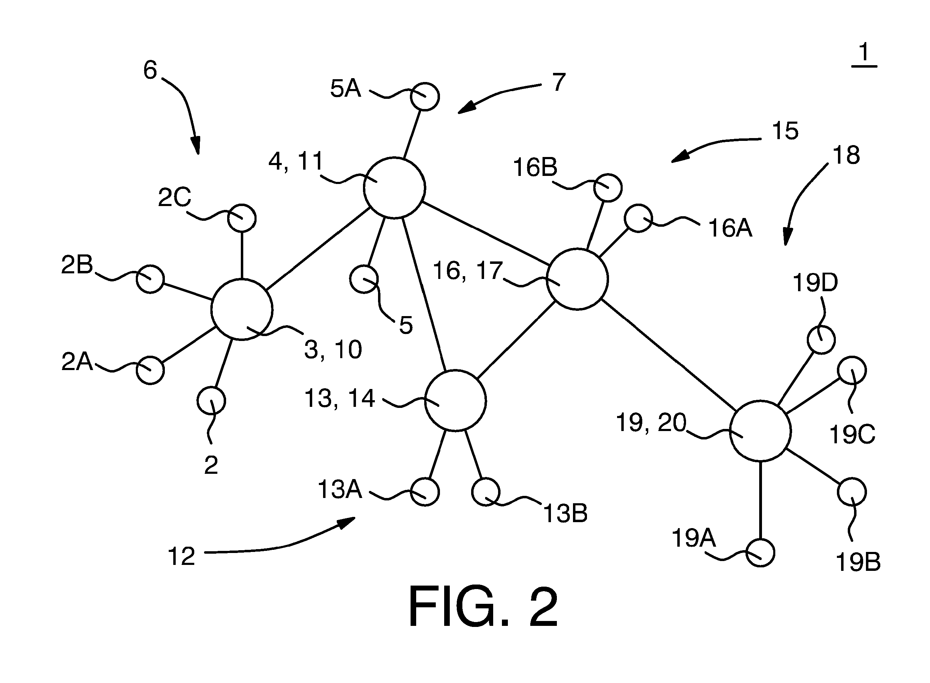

The combination of the distribution system 8 with a plurality of basic service sets 6, 7 allows to create a wireless network 1 of arbitrary size and complexity. Such a type of wireless network 1 may be referred to as an extended service set network 1, an example of which is shown in Fig. 2.

Fig. 2 shows a schematic illustration of links between components of a wireless network 1 according to an embodiment of the present invention. In this embodiment the basic service set 6 comprises stations 2, 2A, 2B, 2C, 3. The basic service set 7 comprises stations 5, 5A. A further basic service set 12 comprises stations 13, 13A, 13B, wherein station 13 is also an access point 14 associated to the basic service set 12. A basic service set 15 comprises stations 16, 16A, 16B, wherein the station 16 is also an access point 17. And, a basic service set 18 comprises stations 19, 19A, 19B, 19C, 19D, wherein station 19 is also an access point 20. The access points 10, 11, 14, 17, 20 communicate with each other over the distribution system 8.

It is noted that the basic service sets 6, 7, 12, 15, 18 can partially overlap so that a contiguous coverage is achieved. Further, the basic service sets 6, 7, 12, 15, 18 may be physically disjointed. Also, at least two of the basic service sets 6, 7, 12, 15, 18 may be physically collocated to provide redundancy.

The wireless network 1 provides at least two categories of service: the station service and the distribution system service. The station service is the set of services that support transport of medium access control (MAC) service data units (MSDUs) between stations within a basic service set, for example, between the stations 2, 2A, 2B, 2C, 3 of the basic service set 6. Hence, for example, the stations 2, 2A, 2B, 2C, 3 of the basic service set 6 can directly communicate with each other.

The distribution system service is the set of services provided by the distribution system 8 that enables the medium access control to transport medium access control service data units between stations that are not in direct communication with each other over a single instance of a wireless medium. For example, consider a data message being sent from station 2 of the basic service set 6 to station 5 of the basic service set 7. The data message is sent from station 2 and received by station 3, which is an input access point 10. The access point 10 forwards the message to the distribution system service of the distribution system 8. The distribution system service of the distribution system 8 delivers the data message within the distribution system 8 such that it arrives at the station 4, which is the output access point 11 associated to the basic service set 7 comprising the station 5.

To deliver the data message within the distribution system 8, the distribution system service needs information about the appropriate access point 11 associated to the basic service set 7 of the station 5. Therefor, an association service is used, which associates each station 4, 5 of the basic service set 7 to the access point 11, wherein each of the stations 4, 5 can be associated to only one access point, that is, in this case, the access point 11.

A medium access control architecture is provided for the wireless network 1. The medium access control architecture incorporates a distributed coordination function and a point coordination function.

The distributed coordination function is a fundamental access method that may be a carrier sense multiple access with collision avoidance (CSMA/CA). The distributed coordination function is implemented in all stations 2 to 5A, 13 to 13B, 16 to 16B, 19 to 19D. For example, for station 2 to transmit, it first senses the medium to determine if another station 2A, 2B, 2C, 3 is transmitting. If the medium is not determined to be busy, the transmission proceeds. On the other hand, if the medium is determined to be busy, the station 2 defers until the end of the current transmission. After deferral, or prior to attempting to transmit again immediately after successful transmission, the station 2 may select a random backoff interval and decrements the backoff interval counter while that medium is idle.

The point coordination function uses a point coordinator, which operates at the access point 10, 11, 14, 17, or 20 of a basic service set 6, 7, 12, 15, 18, to determine which station 2 to 5A, 13 to 13B, 16 to 16B, 19 to 19D currently has the right to transmit. The operation is that of polling, with the point coordinator performing the role of the polling master. The operation of the point coordination function may, depending on the application, require additional coordination, to permit efficient operation in cases where multiple point-coordinated basic service sets 6, 7, 12, 15, 18 are operating on the same channel.

The point coordination function uses a virtual carrier-sense mechanism aided by an access priority mechanism and distributes information within beacon management frames to gain control of the medium by setting a network allocation vector in stations 2 to 5A, 13 to 13B, 16 to 16B, 19 to 19D. The point coordination function provides an access priority to enable a contention-free access procedure. Thereby, the point coordination function controls frame transmission so as to eliminate contention for a specific period.

The wireless network 1 comprises the medium access control architecture incorporating the distributed coordination function. Distribution is the primary service of the wireless network 1 used by stations 2 to 5A, 13 to 13B, 16 to 16B, 19 to 19D. When a data message is sent from station 2 to station 5, the data is first sent from station 2 and received by the station 3, which is an input access point 10. Access point 10 gives the data to the distribution system service of the distribution system 8. The distribution system service then delivers the message within the distribution system 8 so that it arrives at the appropriate distribution system destination, which is the access point 11. From access point 11, which is the station 4, the data is then sent to station 5 within the basic service set 6. Hence, data can be sent between stations 2, 5 of different basic service sets 6, 7.

In the wireless network 1 different frame types which are grouped into different classes can be provided. Frames of a first class can comprise control frames, management frames, and data frames. Possible control frames are request to send, clear to send, acknowledgement, contention-free-end and acknowledgement, and contention-free-end. Possible management frames are probe request or response, beacon, authentication, deauthentication, and announcement traffic indication message. Data frames can comprise frame control bits such as bits to indicate whether the distribution system 8 is involved during transmission. Frames of second class can comprise management frames, such as association request or response, reassociation request or response, and disassociation. Frames of third class can comprise data frames, management frames, and control frames. Data frames may comprise data subtypes, wherein frame control bits may be provided to utilize a distribution system service of the distribution system 8.

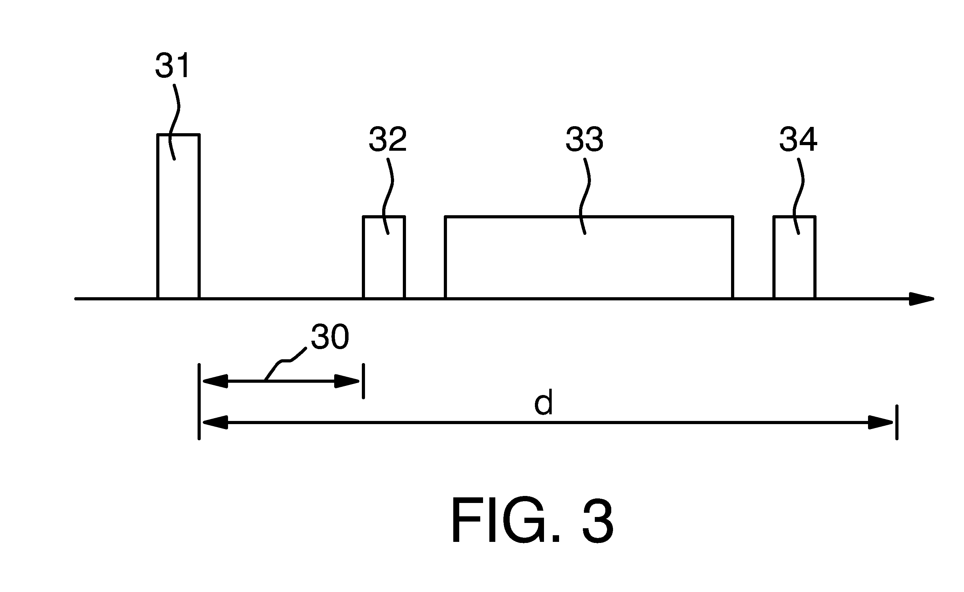

The medium access control architecture incorporates the distributed coordination function as a fundamental access method, which is an access procedure. The distributed coordination function can be characterized as a carrier sense multiple access with collision avoidance. The distributed coordination function is implemented in all stations 2 to 5A, 13 to 13B, 16 to 16B, 19 to 19D. Before transmission, station 2 determines, whether another station 2A, 2B, 2C, 3 is transmitting. If the wireless medium is not determined to be busy, the transmission continues. According to the carrier sense multiple access with collision avoidance method, a gap of a minimum specified duration is used between contiguous frame sequences. Transmitting station 2 ensures that the wireless medium is idle for this required duration before attempting to transmit. In case of a busy wireless medium, station 2 defers until the end of the current transmission. After deferral, or prior to attempting to transmit again immediately after a successful transmission, station 2 selects a random backoff interval 30 (Fig. 3 to 5) and decrements its backoff interval counter while the medium is idle. Further refinements of this method can be implemented to further minimize collisions. For example, the transmitting station 2 and the receiving station 2C can exchange short control frames, which are request to send and clear to send frames, after determining that the wireless medium is idle and after any deferrals or backoffs, before data is transmitted between stations 2 and 2C.

The distributed coordination function enables sharing of the wireless medium between the stations 2 to 5A, 13 to 13B, 16 to 16B, 19 to 19D. Further, all directed traffic between specific stations, for example stations 2, 2C, can use an acknowledgment to enable retransmissions. The carrier sense multiple access with collision avoidance procedure of the distributed coordination function is reducing the collision probability between multiple stations 2 to 5A, 13 to 13B, 16 to 16B, 19 to 19D, which access the wireless medium, at a point where collisions would most likely occur. The highest probability of a collision exists just after the medium becomes idle following a busy medium, which is indicated by the carrier sense function. This is because multiple stations could have been waiting for the medium to become idle. To overcome this problem, the random backoff interval 30 is used so that medium contention conflicts are resolved.

The exchange of a request to send and a clear to send prior to actual data transfer is one means to distribute the wireless medium. The request to send and the clear to send contain a duration d, which defines the period necessary to transmit the actual data and the returning acknowledgement. All stations within the reception range of the station that sends the request to send thus know in advance about the upcoming use of the wireless medium.

The distributed coordination function enables at least two modes of operation, a normal mode and a mesh mode. In normal mode, when station 2 intends to send data to station 2C, station 2 sends a request to send comprising the address of station 2 as a transmitter address, and the address of station 2C as a receiver address. Then, stations 2A, 2B, 3, which are in the neighborhood of stations 2, 2C, set their network allocation vector according to the duration d that the medium is to be reserved to transmit the data from station 2 to station 2C and, eventually, the returning acknowledgement from station 2C to station 2.

The other mode of operation is the mesh mode, which is described in further detail with reference to Figs. 3 to 5.

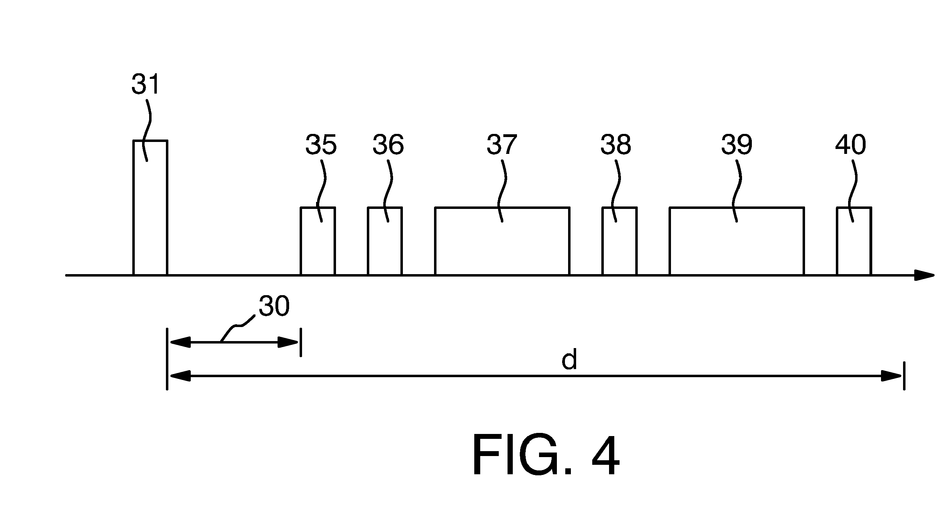

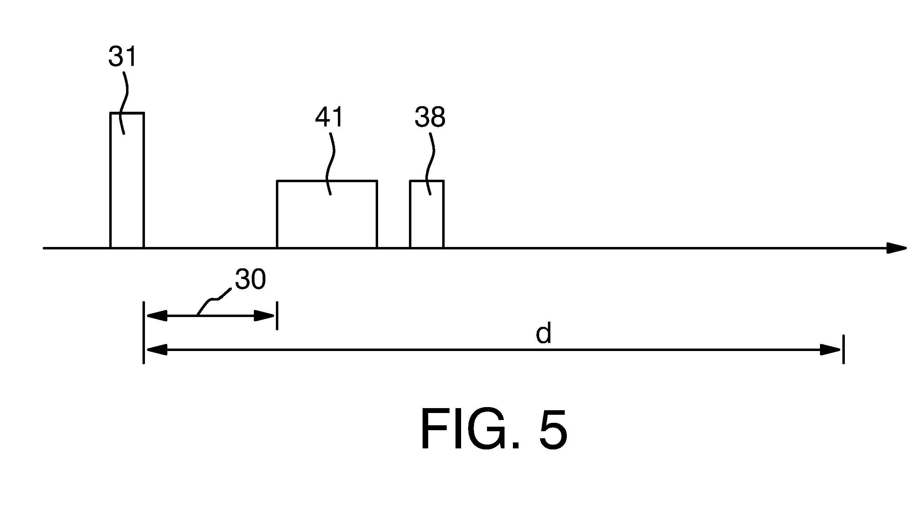

Fig. 3 shows a first example, Fig. 4 shows a second example, and Fig. 5 shows a third example for a communication between mesh devices of an embodiment of a wireless network 1, each of them is illustrating a method for the wireless network 1, respectively.

The access points 10, 11, 14, 17, 20, which are also stations 3, 4, 13, 16, 19, are mesh devices and parts of the distribution system 8, which operates, at least sometimes, as a mesh network. To illustrate transmission of data within the distribution system 8, the access point 17 is regarded as a mesh device, which has data buffered that has to be sent to other access points 10, 11, 14, 20, which are also mesh devices. First, the access point 17 transmits a request to send, which is a request to send frame, to begin transmission of the data buffered according to the distributed coordination function. It is assumed that the capacity usage of the network is relatively high so that priorization of the data transfer within the distribution system 8 is necessary. The access point 17 therefor transmits the request to send 31 according to mesh mode so that the transmitter address and the receiver address of the request to send 31 are both set to the address of the access point 17. Further, the request to send 31 comprises a value for a duration d which is set according to the amount of data buffered at the access point 17. Stations 2 to 2C, 5, 5A, 13A, 13B, 16A, 16B, 19A to 19D receive the request to send 31 and therefore set their network allocation vector to the duration d. Hence, stations 2 to 2C, 5, 5A, 13A, 13B, 16A, 16B, 19A to 19D are silenced during the interval of duration d. The other access points 10, 11, 14, 20, which are mesh devices, determine that the transmitter address of the request to send 31 equals the receiver address of the request to send 31 so that they operate in mesh mode.

The data buffered at the access point 17 is usually intended for all other access points 10, 11, 14, 20 so that at least the neighboring access points 11, 14, 20 will try to receive the data from access point 17. To avoid collision between the access points 11, 14, 20, which try to receive the data from access point 17, the backoff interval 30 of random duration is included. The access point 11 may be the first of the neighboring access points 11, 14, 20 trying to access the wireless medium after its backoff interval 30 ended. According to the first example, as shown in Fig. 3, the access point 11 transmits a clear to send 32, which is a clear to send frame, addressed to the access point 11. Therewith, the access point 11 initiates transmission of the data buffered from the access point 17 to the access point 11. After reception of the clear to send 32 by the access point 11, the access point 11 therefore sends the data 33 to the access point 11. Then, the access point 11 sends an acknowledgement 34, which is an acknowledgement frame, addressed to access point 11, after which exchange of data ends.

Alternatively, the routing protocol may enable information about an usual traffic path. For example, the routing protocol may show that, usually, access point 17 transmits data to access point 11. According to this information access points 10, 14, 20 may keep silent after the transmission of the request to send 31 from access point 17 so that access point 11 is the first access point that tries to receive data from access point 17. The distribution system service of the distribution system 8 has the information to decide whether the access point 11 is the appropriate access point the data 33 should be transmitted to. If access point 11 is not the appropriate one, and, for example, access point 20 is the appropriate, then access point 17 denies to send the data 33 towards access point 11. Then, when access point 20 tries to access the wireless medium and therefor sends a clear to send address to access point 17, the data can be transmitted from access point 17 to access point 20.

Hence, according to the example shown in Fig. 3, access points 10, 11, 14, 20, which have knowledge about data buffered at the access point 17 due to the request to send 31 can poll this data by responding with a clear to send 32.

Fig. 4 shows the second example for a communication between the access points 10, 11, 14, 17, 20. In this case, access point 11 initiates mesh mode by transmitting a request to send 31 in which both the transmitter address and the receiver address are set to the address of the access point 11. Then, other access points 10, 14, 17 in the neighborhood of access point 11 that have data to send to access point 11, which is the sender of the request to send 31, start their transmission using a request to send 35. Due to the different settings of the backoff intervals in each of the access points 10, 14, 17 one of them is first, for example access point 14. Hence, access point 14 sends the request to send 35 addressed to access point 11. Access point 11 answers with a clear to send 36 addressed to access point 14. Then transmission of data 37, which is now buffered at access point 14, occurs. After transmission of data 37 from access point 14 to access point 11, reception of data 37 is acknowledged by access point 11 with an acknowledgement 38, which is an acknowledgement frame. Then, maybe further data 39 is transmitted from access point 14 to access point 11. This further data 39 is also acknowledged by access point 11 with an acknowledgement 40. Thereafter, the transmission between access points 11,14 ends, and the other neighboring access points 10, 17 can send their data to access point 11, when the remaining duration d during which the stations 2 to 2C, 5, 5A, 13A, 13B, 16A, 16B, 19A to 19D keep silent according to their network allocation vector is long enough.

Fig. 5 shows a third example for frame exchange. In this third example frame exchange is provided with a reduced exchange of control frames. First, mesh mode is initiated by sending the request to send 31 in which the transmitter address and the receiver address are both set to the address of, for example, access point 11. When the amount of data buffered, for example, at access point 14 is relatively small, then access point 14 directly starts transmission with data 41. Data 41 is then send from access point 14 to access point 11. Reception of data 41 is acknowledged by access point 11 with an acknowledgement 38. Then, as long as the duration d lasts, the other access points 10, 17 in the neighborhood of access point 11 can try to send data to access point 11.

It is noted that in the embodiments described the access points 10, 11, 14, 17, 20 build up a mesh network, which is the distribution system 8. Hence, in this case, the access points 10, 11, 14, 17, 20 are regarded as mesh devices. Thus, the other stations 2 to 2C, 5, 5A, 13A, 13B, 16A, 16B, 19A to 19D are regarded as non-mesh devices. This architecture has the advantage that the performance of the distribution system 8 is increased.

Depending on the application, other architectures are also possible. For example, within a basic service set 6, 7, 12, 15, 18, also mesh networks may be build up. For example, in the basic service set 6, a part of the stations 2, 2A, 2B, 2C, 3 or all stations 2, 2A, 2B, 2C, 3 may be regarded as mesh devices to build up a mesh network. Then, communication between the stations 2 to 3 of the basic service set 6 is prioritized.

The wireless network 1 and the method for such a wireless network 1 are especially useful, when only a single frequency is available so that legacy stations, which are non-mesh devices, can overload the wireless medium. The legacy devices do not incorporate any means of congestion handling so that their aggressive channel access would lead to insufficient capacity for the wireless network 1. The wireless network 1 enables priorization of mesh devices over non-mesh devices so that a high reliability and an increased performance is achieved.

Although an exemplary embodiment of the invention has been disclosed, it will be apparent to those skilled in the art that various changes and modifications can be made which will achieve some of the advantages of the invention without departing from the spirit and scope of the invention. Such modifications to the inventive concept are intended to be covered by the appended claims in which the reference signs shall not be construed as limiting the scope of the invention. Further, in the description and the appended claims the meaning of "comprising" is not to be understood as excluding other elements or steps. Further, "a" or "an" does not exclude a plurality, and a single processor or other unit may fulfill the functions of several means recited in the claims.

## Claims

1. Wireless network (1) comprising mesh devices and non-mesh devices, wherein a medium access control architecture incorporating at least a distributed coordination function as an access method is provided, wherein a device transmits a request to send to begin transmission of data according to said distributed coordination function, wherein in a normal mode, in which said device is a mesh device or a non-mesh device, said request to send comprises an address of said device transmitting as a transmitter address, and an address of a device to that said device transmitting request sending to as a receiver address, and wherein in a mesh mode a mesh device transmits a request to send (31) comprising an address of said mesh device as both said transmitter address and said receiver address.

2. Wireless network according to claim 1, **characterized in that** in said mesh mode another mesh device, which intends to receive said data from said mesh device, initiates transmission of said data from said mesh device to said other mesh device.

3. Wireless network according to claim 1, **characterized in that** said other mesh device transmits a clear to send (35) to said mesh device so as to initiate said transmission.

4. Wireless network according to claim 2 or 3, **characterized in that** said other mesh device determines whether it intends to receive said data from said mesh device on the basis of said transmitter address of said request to send (31) from said mesh device, which is equal to said receiver address of said request to send (31).

5. Wireless network according to claim 1, **characterized in that** non-mesh devices that receive said request to send from said device set their network allocation vector, when said receiver address is different from their own address, and that mesh devices that receive said request to send from said device set their network allocation vector, when said receiver address is different from their own address and said receiver address is different from said transmitter address.

6. Wireless network according to claim 1, **characterized by** basic service sets (6, 7) and at least a distribution system (8), wherein each of said basic service sets (6, 7) comprises an access point (10, 11), which is a mesh device, and stations (2, 5) that are not access points, wherein data is moved between each of said basic service sets (6, 7) and said distribution system (8) via said access point (10; 11) belonging to this basic service set (6; 7), and that said stations (2, 5) that are not access points are operating as non-mesh devices.

7. Method for a wireless network (1) comprising a medium access control architecture incorporating at least a distributed coordination function as an access procedure, which method comprises the steps of:
- transmitting a request to send to begin transmission of data between a device and another device according to said distributed coordination function, wherein in a normal mode, in which said device is a mesh device or a non-mesh device, said request to send comprises an address of said device as a transmitter address, and an address of said other device as a receiver address, and wherein in a mesh mode, in which said device and said other device are mesh devices, said request to send (31) comprises an address of said device as both said transmitter address and said receiver address.

8. Method according to claim 7, **characterized in that** in mesh mode said request to send comprises a value for a duration (d) for a network allocation vector for non-mesh devices.

9. Method according to claim 8, **characterized by** the step of:
- setting said value for said duration (d) for said network allocation vector for non-mesh devices on the basis of an amount of said data to be transmitted between said device and said other device.

10. Mesh device for a wireless network (1) providing a medium access control architecture incorporating at least a distributed coordination function as an access method, which mesh device is enabled to transmit data according to said distributed coordination function, when a request to send (31), which is received or transmitted by said mesh device, comprises a transmission address that is equal to a receiver address of said request to send.

11. Mesh device according to claim 10, which mesh device is adapted to transmit said request to send (31), wherein said transmitter address and said receiver address of said request to send (31) are both set to an address of said mesh device so as to initiate a mesh mode.

12. Mesh device according to claim 10, wherein said mesh device is adapted to answer said request to send (31) in case that said request to send (31) is received so as to initiate transmission of data.

13. Mesh device according to claim 12, **characterized in that** said request to send (31) received is answered with a clear to send (35).

14. Mesh device according to claim 10, **characterized by** a network allocation vector, wherein said network allocation vector is set, when a receiver address of a request to send received is different from an address of said mesh device and said receiver address is different from a transmitter address of said request to send.
